# EUROPÄISCHE PATENTSCHRIFT

(11) **EP 0 977 519 B1**
(45) Veröffentlichungstag und Bekanntmachung des Hinweises auf die Patenterteilung: **17.09.2003**
(21) Anmeldenummer: 98913681.7
(22) Anmeldetag: 06.03.1998
(51) Int. Cl.: A61C 13/00

(54) **VERFAHREN UND VORRICHTUNG ZUR BEARBEITUNG VON WERKSTÜCKEN IN DER DENTALTECHNIK**
METHOD AND DEVICE FOR PROCESSING WORKPIECES IN DENTAL TECHNOLOGY
PROCEDE ET DISPOSITIF DE FACONNAGE DE PIECES EN TECHNIQUE DENTAIRE

(30) Priorität: 13.03.1997 DE 19710273
(43) Veröffentlichungstag der Anmeldung: 09.02.2000
(73) Patentinhaber: Heraeus Kulzer GmbH & Co.KG, 63450 Hanau (DE)
(72) Erfinder: BRÄMER, Wulf, D-63486 Bruchköbel (DE); KÜHNE, Konrad, D-61209 Echzell (DE); SCHUSTER, Martin, D-63825 Schöllkrippen (DE); BÖHM, Uwe, D-75173 Pforzheim (DE)
(74) Vertreter: Kühn, Hans-Christian
(86) Internationale Anmeldenummer: EP9801333
(87) Internationale Veröffentlichungsnummer: WO98040031

(56) Entgegenhaltungen:
- EP-A- 0 025 911
- EP-A- 0 455 855
- EP-A- 0 671 679

## Beschreibung

Die Erfindung betrifft ein Verfahren zur Bearbeitung von Werkstücken in der Dentaltechnik mittels Zerspanung und/oder Schleifen, wobei die Oberflächenkontur eines drehbaren Dentalmodells mit Hilfe einer gebündelten Strahlung abgetastet und reflektiert wird, wobei die reflektierte Strahlung mittels wenigstens eines parallel zur Drehachse des Modells bewegbaren Strahlungsdetektors erfasst und als dreidimensionale Abbildung in ein Raster von digital codierten Koordinaten-Werten konvertiert wird, die in wenigstens einem Digital-Rechner gespeichert werden, wobei der Rechner nach Erstellung eines internen dreidimensionalen Digital-Modells Steuersignale für eine Bearbeitungsstation zur Bearbeitung des Werkstücks mittels Werkzeug aus den Koordinaten-Werten ableitet.

Die Erfindung betrifft weiterhin eine Vorrichtung zur Ausführung des Verfahrens, wobei die Vorrichtung eine Vermessungseinrichtung mit einer Strahlungsquelle zur Abgabe gebündelter Strahlung und wenigstens zwei Strahlungsdetektoren zur Ermittlung der Oberflächenkontur eines drehbar angeordneten Dentalmodells mittels reflektierter Strahlung auf der Basis optischer Triangulation aufweist und die Vermessungseinrichtung mit einem Digital-Rechner verbunden ist, dessen Ausgang an einen Steuer-Signal-Eingang einer Bearbeitungsstation angeschlossen ist.

Unter dem Begriff Dentalmodell sind hier Gipsmodelle als Abdruck von Oberkiefer oder Unterkiefer und Wachsmodell zusammengefasst; als Werkstück wird das Ausgangsmaterial für den zu erstellenden Rohling bezeichnet, aus dem nachfolgend der prothetische Zahnersatz gebildet wird.
Aus der EP 0 671 679 A1 ist ein Verfahren zum berührungslosen Vermessen dreidimensionaler Objekte auf der Basis optischer Triangulation bekannt, wobei die von einer Strahlungsquelle ausgesendete, gebündelte Strahlung die Oberfläche des Objekts abtastet und von dieser reflektiert wird, wobei die Remission mittels Strahlungsdetektoren erfasst wird; das Objekt wird dabei ringweise abgetastet, wobei nach jeder Umdrehung ein schrittweises, fortlaufendes Abtasten in Z-Richtung erfolgt und die derart ringweise gewonnenen Daten abgespeichert und zur drei-dimensionalen Rekonstruktion des Objektes mittels einer Datenverarbeitungseinheit verwendet werden; zur Vermeidung der Auswirkungen von Hinterschneidungen oder verdeckten Stellen wird das ringweise Abtasten bei einem vorgegebenen Z-Abtastschritt unter unterschiedlichen Winkelstellungen des zusammen mit der Strahlungsquelle bewegbaren Abtastkopfes durchgeführt; ggf. werden Abtastungen wiederholt.

Weiterhin ist es aus der DE 28 04 479 A1 bzw. DE 39 10 855 C2 bekannt, die Konfiguration eines um eine Achse gedrehten Objekts durch Laserstrahlen berührungsfrei zu messen.

Weiterhin ist es aus der US 3,861,044 bekannt, auf der Basis eines Wachsmodells, dessen Geometrie elektrooptisch erfasst wird, Daten zu erfassen, die die Basis für eine Schleif- bzw. frästechnische Herstellung von individuellem prothetischen Zahnersatz bilden.

Aus der US 46 11 288 ist es bekannt, mittels wenigstens einer Strahlenquelle Lichtwellenenergie auf einen Körperbereich zwecks Erstellung einer Prothese zu richten, wobei die Wellen reflektiert werden und daraus analoge Intensitätswerte gewonnen werden; anschließend wird in einem Analog-Digitalwandler eine numerische Information erstellt, welche die Charakteristika der bestrahlten Region repräsentiert und anschließend wird eine drei-dimensionale Analyse der Form und Dimensionen dieser numerischen Information vorgenommen und ein dreidimensionales Bild geschaffen, welches der späteren Prothese entspricht und in die entsprechende Region einzupassen ist; durch eine Signalverarbeitungseinrichtung werden Steuersignale für eine Bearbeitungsmaschine zur Herstellung einer Prothese aus einem Werkstück ausgegeben.
Die Bearbeitungsmaschine kann eine Vielzahl von Werkzeugen aufweisen, deren Bearbeitungsfolge numerisch ausgewählt wird, wobei die numerischen Steuersignale vorschiebend oder zurückziehend von Werkstück und Werkzeug sowie relative Momente gegeneinander steuern. Als numerisch gesteuerte Werkzeugmaschine kann beispielsweise eine Fräsmaschine oder eine Laserstrahl-Vorrichtung eingesetzt werden.

Weiterhin ist aus der DE 36 13 096 A1 ein Verfahren zum Bearbeiten von Werkstücken mit einem programmierten Mehrachsen-Roboter bekannt, der einen Laserstrahl entlang einer dreidimensionalen Werkstückkontur führt, wobei ein dreidimensionales Profil-NC-Programm durch Abtasten der Markierung mittels eines von dem Mehrachsen-Roboter geführten Sensors erstellt wird, der die Achsen des Roboters so regelt, dass der Sensor stets den Markierungen folgt und an vorgegebenen Punkten die Koordinaten des Sensors in die NC-Steuerung als Programmpunkte eingegeben werden und sodann die Werkstücke auf der Basis dieses NC-Programms bearbeitet werden; zum Abtasten der Markierungen ist ein TV-Kamerasensor vorgesehen, der die Werkzeugnormale bzw. Werkzeughöhe zur Werkstückoberfläche ermittelt, so dass zumindestens an den vorgegebenen Punkten der TV-Kamerasensor normal bzw. im Werkzeugsollabstand (senkrecht) zur Werkstockoberfläche orientiert ist.

Weiterhin ist es aus der US 46 63 720 bekannt, Dentalprothesen mittels interferometrischer Muster-Erzeugung durch kohärentes oder nichtkohärentes Licht und Abtasten mit anschließender Analog/Digitalwandlung, CAD-Bearbeitung mit anschließender maschineller Bearbeitung zu erstellen.

Aus der EP 0 490 848 B1 ist weiterhin ein Verfahren zur Herstellung individuell geformter dreidimensionaler Körper, die mindestens Teile von künstlichem Zahnersatz, Zahnbrücken und Verbindungen, Stützteilen für die Rekonstruktion von Gewebeaufbau und Werkzeuge für die Herstellung von solchem Zahnersatz, Stützteilen, Brücken und Verbindungen oder Teilen derselben bilden sollen, bekannt, wobei das jeweilige Modell gleichzeitig rotiert und mittels Abtasteinrichtung abgetastet wird in einem bestimmten Winkel bezüglich der Rotationsachse des abgetasteten Modells; anschließend erfolgt eine Übertragung einer rechner-internen Darstellung über eine Verbindung in einem Telekommunikationsnetz mit Sende- und Empfangseinrichtungen, wobei das Werkstück in einer Winkelbeziehung zwischen dem Rohling und dem Werkzeug bearbeitet wird und der bevorzugte Winkelbereich innerhalb von 30 bis 60° liegt.

Als problematisch erweist sich hierbei die eingeschränkte Winkelbeziehung zwischen Werkzeug und Rohling. Weiterhin ist der Datentransfer mittels Modem im Verhältnis zu den großen Datenmengen eines digital gespeicherten Modells relativ zeitaufwendig.

Die Erfindung stellt sich ausgehend von der EP 0 671 679 bzw. der entsprechenden DE 44 07 518 C2 die Aufgabe ein Verfahren sowie eine Vorrichtung zum Herstellen von individuellem Zahnersatz aus metallischen und nichtmetallischen Werkstoffen nach berührungslosem optischen Abtasten von Dental- bzw. Wachsmodellen anzugeben, wobei sowohl Herstellkosten als auch Fertigungszeiten reduziert werden sollten. Weiterhin soll eine wirtschaftliche und qualitativ optimale Ausnutzung von metallischen, bzw. nichtmetallischen Werkstoffen - insbesondere beim Einsatz von Edelmetall - bei der Herstellung erfolgen.

Die Aufgabe wird verfahrensgemäß durch die Verfahrens schritte im kennzeichnenden Teil des Anspruchs 1 gelöst.

Als besonders vorteilhaft erweist es sich, dass nach dem Verfahren sowohl Edelmetalle als auch Nichtedelmetalle sowie andere Werkstoffe, wie beispielsweise Kunststoffe, Keramik-Kunststoffkombinationswerkstoffe als auch Vollkeramiken bearbeitet werden können; weiterhin erweist es sich als vorteilhaft, dass die Halterung von Werkstück bzw. Werkzeug in allen sechs Freiheitsgraden eine rasche und besonders präzise Bearbeitung des Werkstücks ermöglicht, wobei eine hohe Flexibilität bezüglich Modellform und Werkstückform sowie Materialeigenschaft des Werkstücks möglich ist.

In einer vorteilhaften Ausgestaltung des Verfahrens wird die reflektierte Strahlung mittels zweier parallel zur Drehachse des Modells bewegbarer Strahlungsdetektoren erfasst; dabei können nach Erstellung wenigstens eines weiteren Digital-Modells im Rechner die Daten an eine digitale Empfangs- und Sammeleinrichtung übertragen werden, die Datensätze hinsichtlich der Größe der zur erstellenden Körper und des gewünschten Werkstoffs auf wenigstens zwei Bearbeitungsstationen verteilt werden.

Ein wesentlicher Vorteil der angegebenen Lösung liegt darin, dass Modelle unterschiedlicher Formen und unterschiedlicher Werkstoffeigenschaften in verschiedenen Bearbeitungsstationen hergestellt werden können, wobei die Übertragung der Modell-Datei unter Verzicht auf Modulation und Demodulation über ein digitales Übertragungssystem (ggf. Bus-Struktur) - wie beispielsweise Optobus/SCI oder ISDN-Netz erfolgen kann.

Zur optimalen Ausnutzung von Werkstücken können die Geometrie von Modell und Werkstück miteinander verglichen werden, um eine optimale Positionierung des Modells innerhalb des Werkstückumfangs zu erzielen, wobei es sich als besonders zweckmäßig erweist, mehrere Rohlinge aus einem einzigen Werkstück herzustellen; dies ist insbesondere bei kostspieligen Werkstoffen wie z.B. Edelmetallen, bzw. Edelmetalllegierungen vorteilhaft; dabei können wenigstens zwei interne dreidimensionale Modelle zur Bildung von wenigstens zwei Rohlingen aus einem einzigen Werkstück mit dessen interner dreidimensionaler Abbildung verglichen werden.

In einer bevorzugten Ausführungsform soll eine um sechs Freiheitsgrade bewegbare Halterung eines programmgesteuerten Handhabungssystems - nachstehend Roboter bzw. Roboterhalterung genannt - das Werkstück gegen eine Bearbeitungsstation mit eingesetztem Werkzeug führen; dabei können Roboterhalterung und Werkzeugbearbeitungsstation zusätzlich translatorisch gegeneinander bewegbar sein, so dass beispielsweise mehrere Werkzeuge an dem Roboter vorbeigeführt werden bzw. der Roboter an mehreren ortsfest angeordneten Werkzeugstationen vorbeigeführt wird, um unterschiedliche Bearbeitungsvorgänge vornehmen zu können.

Es ist weiterhin möglich, die Werkzeugführung mittels Roboter vorzunehmen, wobei dann die Werkstückhalterung starr bzw. translatorisch verschiebbar erfolgt.

In einer bevorzugten Ausführungsform wird zunächst die Oberflächenkontur eines Dentalmodells abgetastet und gespeichert; nach Aufbringen von Wachs auf das Dentalmodell wird die Oberflächenkontur des Wachsmodells in einem zweiten Schritt mittels Laserstrahl abgetastet und dessen zugehörige Oberflächenkoordinatenwerte gespeichert und in einem dritten Schritt wird aus den Oberflächenkoordinatenwerten von Dentalmodell und Wachsmodell ein internes flächenhaftes drei-dimensionales Modell des herzustellenden Rohlings erstellt.

Als besonders vorteilhaft erweist es sich dabei, dass die Form des späteren Rohlings anhand eines normalen Wachsmodells vorgegeben wird, welches mittels der im Dentallabor üblichen Praxis erstellt werden kann.

Nach einer weiteren bevorzugten Ausführungsform ist es auch möglich, ein Dentalmodell oder ein mit einer Beschichtung versehenes Dentalmodell mittels Laserstrahl abzutasten, die zugehörigen Koordinatenwerte zu speichern und nach Aufbau des Wachsmodells dieses vom Dentalmodell abzunehmen und in einem dritten Schritt die Oberfläche des abgenommenen Wachsmodells mittels Laserstrahl abzutasten, um aus den Oberflächenkoordinatenwerten ein internes flächenhaftes drei-dimensionales Modell des herzustellenden Rohlings aufzubauen; hier erweist sich die Mehrfachabtastung gemäß der eingangs genannten EP 0 671 679 A1 als besonders vorteilhaft, um auch Hinterschneidungen des Modells zu berücksichtigen.

Anhand eines Übertragungsverfahrens ist es vorteilhafterweise auch möglich, Modellabtastung und Rohlingerstellung räumlich voneinander zu trennen, wobei dann die Oberflächenkoordinatenwerte des intern gespeicherten Modells zusammen mit Identifikationssignalen für Werkstoffangaben und Auftraggeber über eine digitale Daten-Übertragungs-Strecke mit hohem Durchsatz - wie beispielsweise Optobus/SCl oder ISDN - übertragen werden; hier erweist es sich als vorteilhaft, dass Rohlinge aus unterschiedlichen Werkstoffen unter optimaler Ausnutzung der Werkstücke hergestellt werden können.

Bei Werkstoffen auf Edelmetallbasis kann durch zentrale Bearbeitung der Werkstücke bzw. Rohlinge die mit Edelmetall-Bevorratung verbundene kostspielige Kapitalbindung reduziert werden.

Die Aufgabe wird vorrichtungsgemäß dadurch gelöst, dass zum Vergleich der Geometrie eines mittels Werkstückvermessungsstation erfassten Werkstücks als Rohling mit der Oberflächenkontur des Dentalmodells ein Modellkomparator einer als Digital-Rechner ausgebildeten Sammler- und Verteilerstation vorgeschaltet ist, dass die Bearbeitungsstation wenigstens eine Werkzeugmaschine und einen Roboter aufweist, der wenigstens eine Halterung zur Aufnahme des Werkstücks oder des Werkzeugs enthält, wobei die Halterung um alle sechs Freiheitsgrade bewegbar ist und sechs vom Rechner ansteuerbare Antriebselemente vorgesehen sind, von denen jeweils drei Elemente Steuersignale für die 3 Freiheitsgrade der Translation und jeweils drei Elemente Steuersignale für die 3 Freiheitsgrade der Rotation empfangen.

In einer bevorzugten Ausführungsform weist der Roboter eine Halterung zur Positionierung des Werkstücks auf, wobei der zugehörige Digitalrechner jeweils Steuersignale für drei Freiheitsgrade der Translation und für drei Freiheitsgrade der Rotation der Halterung ausgibt; vorteilhafterweise ist es möglich nacheinander verschiedene Bearbeitungsstationen mittels Roboter zu durchlaufen, wobei auch eine serielle Erstellung von unterschiedlichem, individuellem Zahnersatz möglich ist, sofern eine relative Bewegung zwischen Roboter und Werkzeugbearbeitung vorgesehen ist. Es ist auch möglich, eine Station zur Rohbearbeitung und eine davon getrennte Station zur Feinbearbeitung vorzusehen.

Vorzugsweise wird die Halterung zur Positionierung des Werkstücks mittels Roboterarm geführt.

In einer weiteren vorteilhaften Ausgestaltung der Vorrichtung werden digitale Informationen über wenigstens zwei Modelle von einer Sammeleinrichtung an jeweils passende Bearbeitungsstationen übertragen; als besonders vorteilhaft erweist es sich hierbei, dass pro Bearbeitungsstation nur ein einziger Werkstoff zu bearbeiten ist, so daß Zwischenreinigungsvorgänge bei einem Werkstoffwechsel von Rohling zu Rohling entfallen können.Weiterhin können Modellabtastung und Empfangs- und Sammeleinrichtung - wie z.B. ISDN - räumlich getrennt sein, wobei die Verbindung über ein digitales Übertragungssystem, digitales Netzwerk sowie ggf. System mit Busstruktur erfolgt.

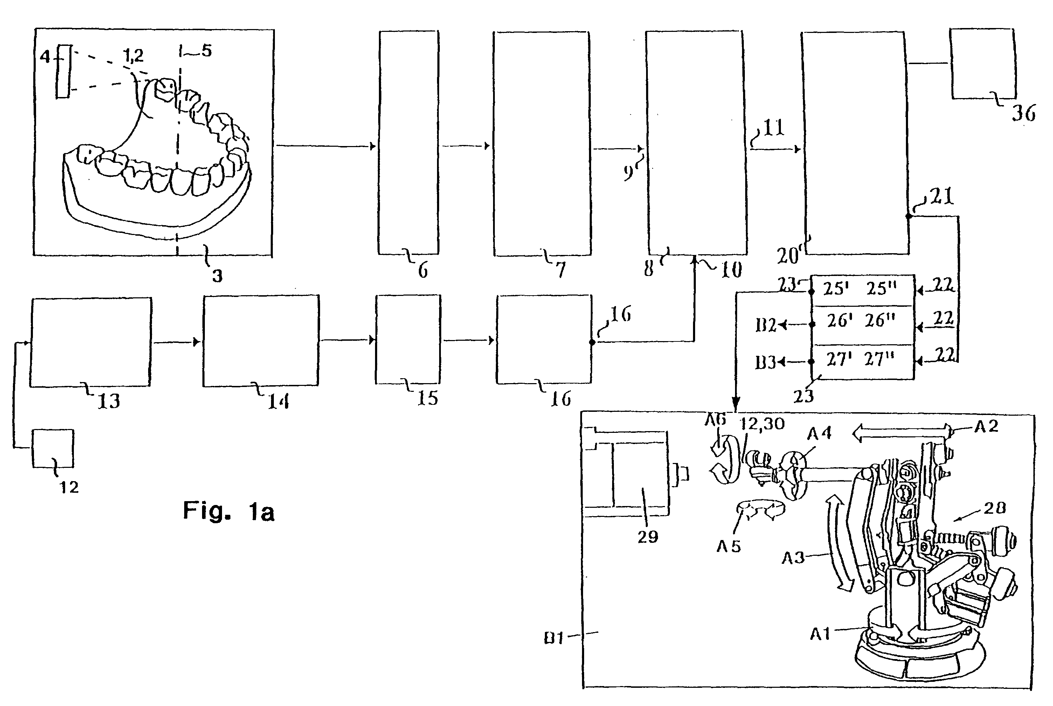

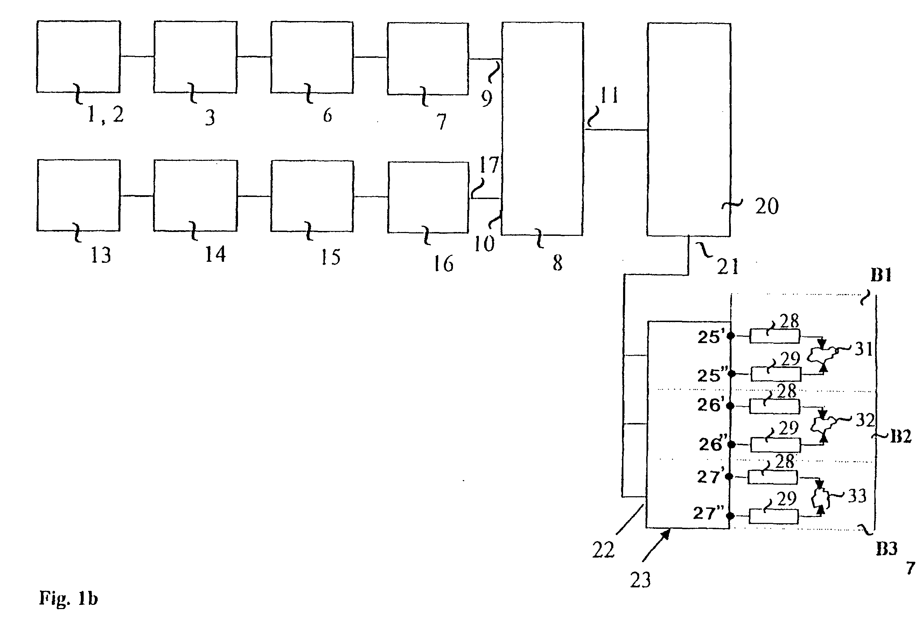

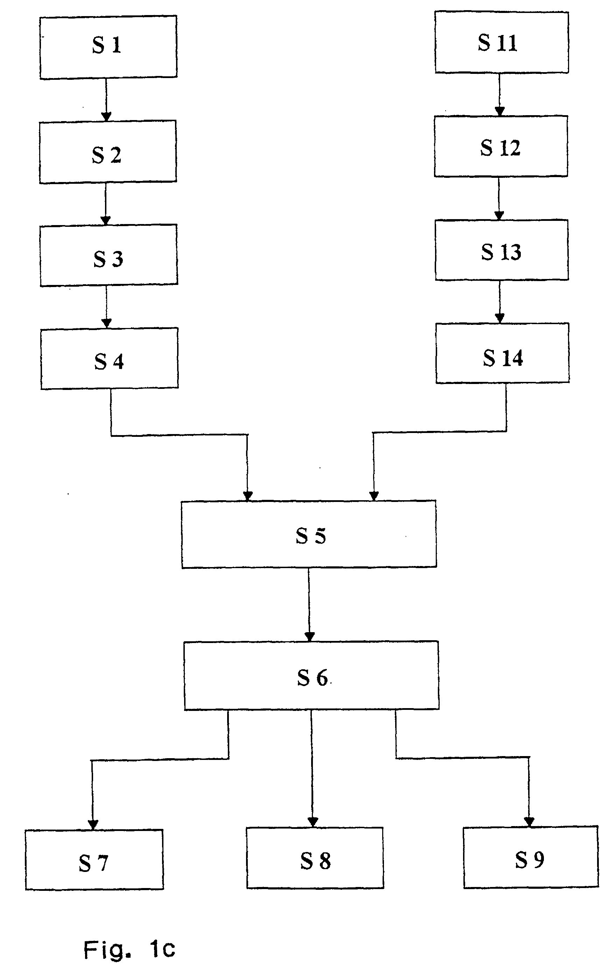

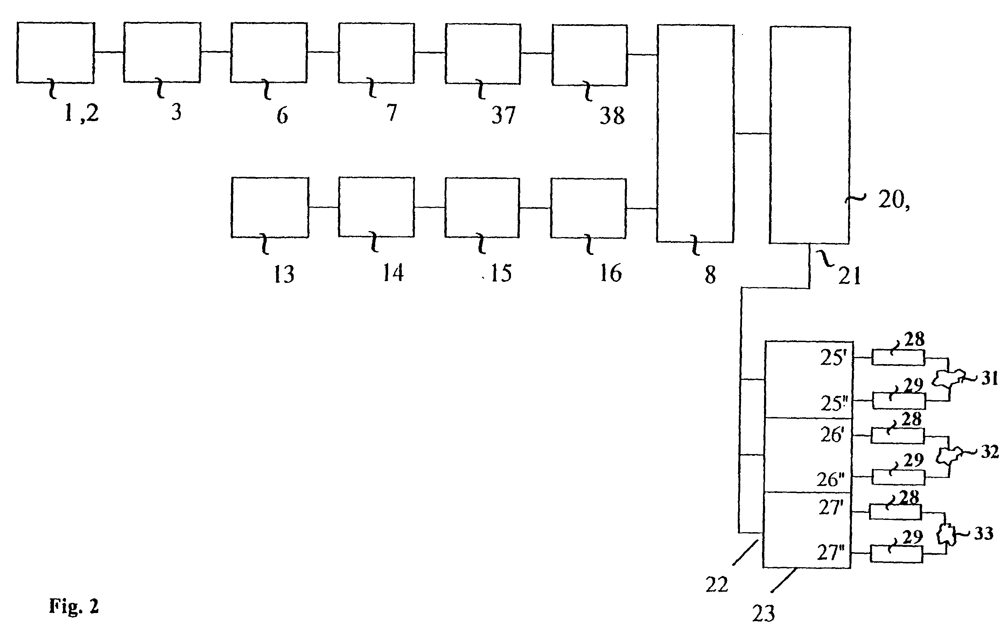

Die Erfindung wird im Folgenden anhand der Figuren 1a, 1b, 1c und 2 näher erläutert.
Figur 1a zeigt symbolisch die Verfahrensschritte zur Bearbeitung von Werkstücken in der Dentaltechnik zur Herstellung von Rohlingen für prothetischen Zahnersatz,
Figur 1 b zeigt schematisch den Aufbau einer hierzu erforderlichen Vorrichtung,
Figur 1c zeigt schematisch einen schrittweisen Verfahrensablauf;
Figur 2 zeigt schematisch eine Vorrichtung mit räumlicher Trennung zwischen Modelabtastung und Rohlingserstellung.

Gemäß Figur 1a befindet sich zunächst ein Gipsmodell als Dentalmodell 1 (Kieferabdruck) in einer Vermessungseinrichtung 3, welche auf der Basis optischer Triangulation mittels einer Vorrichtung 4 gemäß EP 0 671 679 A1 die Oberflächenkoordinaten X1, Y1, Z1 des um Achse 5 rotierenden Dentalmodells 1 erfaßt und diese nach einer Analog/Digitalwandlung in Analog/Digital-Wandler 6 in einem Digital-Rechner 7 zur Erstellung eines internen digitalen Modells von Dentalmodell 1 speichert. Weiterhin wird anschließend ein Wachsmodell als Dentalmodell 2 als Vorlage für den später zu erstellenden Rohling in Vermessungseinrichtung 3 eingebracht und dessen Oberflächenkoordinatenwerte X2, Y2, Z2 ebenfalls unter Rotation des Dentalmodells 2 ermittelt und gespeichert. Die entsprechenden Bauelemente der Vorrichtung sind in Figur 1b schematisch dargestellt, wobei in Figur 1a mit Bezugsziffer 1, 2 die Modellerstellung symbolisch sowohl für Gipsmodell als auch für Wachsmodell dargestellt ist, während die Vermessungseinrichtung mit Bezugsziffer 3, die Analog/Digitalwandlung in Wandler mit Ziffer 6 und die Speichereinrichtung als Teil eines Digital-Rechners 7 dargestellt sind.

Durch Vermessungseinrichtung 3 wird sowohl das Gipsmodell 1 (Beispiel Zahnstumpf) als auch das Wachsmodell 2 (entspricht dem späteren Rohling für prothetischen Zahnersatz) jeweils mit den Koordinatenwerten X1, Y1, Z1 und X2, Y2, Z2 abgetastet und nach Analog/Digital-Wandlung und Erstellung eines rechner-internen Digitalmodells im Rechner einem digitalen Modell-Komparator 8 über dessen Eingang 9 zugeführt, wobei Komparator 8 weiterhin ein Signal über Eingang 10 erhält, welches ein internes digitales Modell vom Werkstück 12 für denspäteren Rohling bilden soll. Hierzu wird das Werkstück 12 über Eingabe 13 einer Werkstückvermessungsstation 14 zugeführt, die ähnlich wie die Baueinheiten 6 und 7 eine Analog/Digital-Wandlung in Analog/Digital-Wandler 15 vornimmt und im Speicher von Digital-Rechner 16 ein internes digitales Modell vom Werkstück mit Identifikationsangaben über die Werkstückeigenschaften erstellt; es ist jedoch auch möglich, die Werkstückgeometrie und ggf. Werkstückeigenschaft über eine Bildschirm-Tastatur einzugeben bzw. über eine optische Codierung einlesen zu lassen. Die Werte zur Werkstückgeometrie werden sodann über Ausgang 17 des Digital-Rechners 16 und Eingang 10 dem Modell-Komparator 8 zugeführt, wobei das digitale Dentalmodell als Gipsmodell 1 und als Wachsmodell 2 mit dem ermittelten Modell des Werkstücks 12 verglichen wird, um eine optimale Ausnutzung des Werkstückvolumens vorzunehmen. Dabei wird die zum jeweiligen Modell gehörende Auswahl des Werkstoffs berücksichtigt.

Über Ausgang 11 ist der Modellkomparator 8 mit einer Sammler- und Verteilerstation 20 verbunden, welche verschiedene zu erstellenden Modelle M1, M2, M3 auf verschiedene Bearbeitungsstationen B1, B2, B3 verteilt, wobei in Figur 1a zur Vereinfachung nur eine Station B1 dargestellt ist; dabei soll jeder Bearbeitungsstation jeweils ein bestimmter Werkstoff zugeordnet sein; gemäß Figur 1a ist der Ausgang 21 der Sammler- und Verteilerstation 20 mit Eingang 22 einer numerischen Prozessorsteuerung 23 verbunden; mehrere Ausgänge 25', 25", 26', 26" 27', 27" der Prozessorsteuerung 23 dienen zur Ansteuerung der aus Roboter 28 und Werkzeugmaschine 29 bestehenden Bearbeitungsstationen B1, B2, B3, wobei über Ausgänge 25', 26', 27' die jeweils in sechs Freiheitsgraden A1, A2, A3, A4, A5, A6 arbeitenden Roboter 28 angesteuert werden, während die eigentlichen Werkzeugmaschinen 29, zum Fräsen, Schleifen, Bohren jeweils über Ausgang 25", 26", 27" angesteuert werden. Die aus dem Werkstück 12 zu erstellenden Rohlinge sind gemäß Figur 1b jeweils mit 31, 32, 33 bezeichnet; sie sollen während der Bearbeitung den zu erstellenden Modellen M1, M2, M3 zunehmend ähnlicher werden. Der Angriffswinkel zwischen der Arbeitsachse des Werkzeugs wie z.B. Bohrer oder Fräse und der Arbeitsachse des Roboterarms zur Halterung des Werkstücks liegt im Bereich von ± 180°.

In Figur 1a ist dieser Betrieb schematisch dargestellt, wobei die Achsen bzw. Freiheitsgrade A1, A2, A3, A4, A5, A6 des Roboters symbolisch dargestellt sind. Die jeweilige Werkzeugmaschine ist mit Ziffer 29 bezeichnet. Anhand eines mit dem Digital-Rechner verbundenen Bildschirms ist die Plazierung des digitalen Dental-Modells in dem digitalen Werkstückmodell auf einem Bildschirm 36 zu beobachten, so daß bei fehlerhafter Plazierung bzw. fehlerhaftemFormat des Werkstücks 12 (ggf. manuell) eingegriffen und ein neues Werkstück eingebracht werden kann.

Anhand Figur 1c ist der Verfahrensablauf in Einzelschritten näher erläutert.

In Schritt S1 erfolgt nacheinander eine Vermessung von Dentalmodell und Wachsmodell, in Schritt S2 werden die ermittelten Daten in Digitalwerte gewandelt, in Schritt S3 werden die Digitalwerte der Koordinaten-Punkte numerisch gespeichert, d.h. in einem Digital-Speicher als Datei eines Digitalrechners festgehalten und ggf. zur Flächendarstellung interpoliert und anschließend in Schritt S 4 einem digitalen Komparator zugeführt. Parallel zur Modellabtastung erfolgt eine Werkstückvermessung im Schritt S11, wobei die dort ermittelten Werte im Schritt S12 in Digitalwerte gewandelt werden und die erhaltenen Digitalwerte im Schritt S13 einem Digitalspeicher als Datei in einem Digitalrechner zugeführt und gespeichert werden; es ist jedoch auch möglich, auf Schritte S11, S12 zu verzichten und die Werkstückgeometrie bzw. Werkstoffeigenschaft im Schritt S13 direkt einem Digitalrechner einzugeben. Anschließend werden die numerischen Daten im Schritt S14 über das Werkstück dem digitalen Modell-Komparator zugeführt und im Schritt S5 im digitalen Komparator mit den Digital-Werten des Modells verglichen, wobei eine optimale Plazierung des digitalisierten Dental-Modells innerhalb des Volumens des digitalisierten Werkstücks unter optimaler Werkstoffausnutzung angestrebt wird. Nach der Plazierung wird bei Berücksichtigung des gewünschten Werkstoffs in Schritt S6 eine Bearbeitungsstation ausgewählt, wobei jede der hier vorgesehenen drei Bearbeitungsstationen gegebenenfalls nur Rohlinge aus einem bestimmten Werkstoff im Schritt S7, S8, S9 verarbeiten soll, um nach Möglichkeit unnötige Zwischenreinigungsvorgänge der Werkzeuge bei Werkstoffwechsel zu vermeiden.

In den Schritten S7, S8, S9 wird das Werkstück von einem Roboterarm mittels Halterung geführt, wobei der Roboterarm um alle sechs Freiheitsgrade beweglich ist; das Werkstück wird dabei gegen Werkzeugmaschinen geführt, welche über eine numerische Werkzeugsteuerung jeweils angesteuert werden.

Figur 2 ist auf eine Fernübertragung von digitalen Speicherinhalten des digitalen Dental-Modells gerichtet, wobei Abtastung, Analog/Digital-Wandlung und Aufbau einer digitalen drei-dimensionalen Abbildung entsprechend Figur 1b abläuft, jedoch die Übertragung des digitalen Dentalmodells und Wachsmodell über eine digitale Übertragungsstrecke 37 - wie z.B. Bus-System, bzw. ISDN-Leitung - vorgesehen ist, welche in einem räumlich vom ersten Rechner 7entfernten zweiten Rechner 38 einen erneuten Aufbau des digitalen Dental-Modells entsprechend Dentalmodell 1, 2 mittels der übertragenen digitalen Werte ermöglicht; weiterhin wird eine Übertragung von Identifikationssignal, Werkstoffeigenschaft und Kunden- bzw. Patientendatei vorgenommen. Es ist dabei auch möglich neben schneller serieller Übertragung als Übertragungsstrecke 37 ein Bussystem - wie z.B. Optobus/SCl-System - einzusetzen, wodurch eine noch raschere Übertragung der digitalen Werte ermöglicht wird; in einem solchen Fall können der 1. Digital-Rechner 7, Übertragungs-Strecke 37 und 2. Digital-Rechner 38 praktisch als ein gemeinsames Rechnersystem angesehen werden. Die Funktion nach Figur 2 ist mit Ausnahme des Übertragungsweges und angeschlossenen zweiten Rechners ansonsten mit der anhand Figur 1b beschriebenen Wirkungsweise vergleichbar. Es ist somit möglich, digitale Dental-Modelle aus verschiedenen Vermessungseinrichtungen in eine zentrale Bearbeitungsstation zu übertragen, wo eine sichere Bevorratung edelmetallhaltiger Werkstoffe und eine optimale Raumausnutzung der jeweiligen Werkstoff-Volumina durch geschickte Plazierung von Dental-Modellen im Werkstückvolumen möglich ist.

## Patentansprüche

1. Verfahren zur Bearbeitung von Werkstücken (12) in der Dentaltechnik mittels Zerspanung und/oder Schleifen, wobei die Oberflächenkontur eines drehbaren Dentalmodells (1, 2) mit Hilfe einer gebündelten Strahlung abgetastet und reflektiert wird, wobei reflektierte Strahlung mittels wenigstens eines parallel zur Drehachse des Modells bewegbaren Strahlungsdetektors erfasst und als dreidimensionale Abbildung in ein Raster von digital codierten Koordinaten-Werten konvertiert wird (6), die in wenigstens einem ersten Digital-Rechner (7) gespeichert werden, wobei der erste Rechner (7) nach Erstellung eines internen dreidimensionalen Digital-Modells Steuersignale für eine Bearbeitungsstation (B1) zur Bearbeitung des Werkstücks (12) mittels Werkzeug aus den Koordinaten-Werten ableitet, **dadurch gekennzeichnet, dass** einem Modellkomparator und einer als zweiter Rechner ausgebildeten digitalen Sammler- und Verteilerstation (20) Informationen über die Geometrie des zu bearbeitenden Werkstücks (12) zugeführt werden, aus denen eine interne dreidimensionale Werkstück-Abbildung erstellt wird, diese mit einer internen dreidimensionalen Abbildung wenigstens eines Modells (1, 2) verglichen wird und Steuersignale (21) zur optimalen Ausnutzung des Volumens des Werkstücks (12) bei Bildung wenigstens eines Rohlings ausgegeben werden, wobei vom zweiten Rechner jeweils wenigstens drei Steuersignale für eine relative Translations-Bewegung und jeweils wenigstens drei Steuersignale für eine relative Rotations-Bewegung zwischen Werkzeug und Werkstück (12) zur Herstellung wenigstens eines Rohlings aus dem Werkstück (12) ausgegeben werden.

2. Verfahren nach Anspruch 1, **dadurch gekennzeichnet, dass** die reflektierte Strahlung mittels zweier parallel zur Drehachse (5) des Modells (1, 2) bewegbarer Strahlungsdetektoren erfasst wird.

3. Verfahren nach Anspruch 1 oder 2, **dadurch gekennzeichnet, dass** nach Erstellung wenigstens eines weiteren Digital-Modells im ersten Rechner die Daten an die digitale Sammler- und Verteilerstation (20) übertragen werden, die Datensätze hinsichtlich der Größe der zur erstellenden Körper und des gewünschten Werkstoffs auf wenigstens zwei Bearbeitungsstationen verteilt.

4. Verfahren nach einem der Ansprüche 1 bis 3, **dadurch gekennzeichnet, dass** die Daten mittels einer Bus-Übertragungsstrecke oder digitale Übertragungsstrecke an die digitale Sammler- und Verteilerstation (20) übertragen werden.

5. Verfahren nach einem der Ansprüche 1 bis 4, **dadurch gekennzeichnet, dass** wenigstens zwei interne dreidimensionale Modelle zur Bildung von wenigstens zwei Rohlingen aus einem einzigen Werkstück (12) mit dessen interner dreidimensionaler Abbildung verglichen werden.

6. Verfahren nach einem der Ansprüche 1 bis 5, **dadurch gekennzeichnet, dass** die Steuersignale einer als Roboter (28) dienenden Bearbeitungsstation zur Bewegungssteuerung wenigstens einer Halterung in allen sechs Freiheitsgraden zugeführt werden, wobei in der Halterung das Werkstück und/oder das Werkzeug geführt wird.

7. Verfahren nach einem der Ansprüche 1 bis 6, **dadurch gekennzeichnet, dass** in einem ersten Schritt wenigstens die Oberflächenkontur eines Dentalmodells (1, 2) oder eines mit einer Beschichtung versehenen Dentalmodells mittels Laserstrahl abgetastet und die zugehörigen Oberflächen-Koordinaten-Werte gespeichert werden, dass nach Aufbringung von Wachs auf das Dentalmodell (1, 2) ein Wachsmodell entsteht, dessen Oberflächenkontur in einem zweiten Schritt mittels Laserstrahl abgetastet wird, wobei dessen zugehörige Oberflächen-Koordinatenwerte gespeichert werden und dass in einem dritten Schritt aus den Oberflächen-Koordinatenwerten von Dentalmodell (1, 2) und Wachsmodell ein internes dreidimensionales Modell des herzustellenden Rohlings erstellt wird.

8. Verfahren nach einem der Ansprüche 1 bis 6, **dadurch gekennzeichnet, dass** in einem ersten Schritt wenigstens die Oberflächenkontur eines Dentalmodells (1, 2) oder eines mit einer Beschichtung versehenen Dentalmodells mittels Laserstrahl abgetastet und die zugehörigen Oberflächen-Koordinaten-Werte gespeichert werden, dass nach Aufbringung von Wachs auf das Dentalmodell (1, 2) ein Wachsmodell entsteht, das in einem zweiten Schritt wieder vom Dentalmodell (1, 2) abgenommen wird und dass in einem dritten Schritt die Oberfläche des abgenommenen Wachsmodells mittels Laserstrahl abgetastet und aus den Oberflächen-Koordinaten-Werten ein internes dreidimensionales Modell des herzustellenden Rohlings erstellt wird.

9. Verfahren nach einem der Ansprüche 1 bis 8, **dadurch gekennzeichnet, dass** die Oberflächen-Koordinaten-Werte des intern gespeicherten Modells des Rohlings als Steuersignale mittels digitalem Übertragungssystem zur Bearbeitung des Werkstücks weitergeleitet werden.

10. Verfahren nach Anspruch 9, **dadurch gekennzeichnet, dass** die Steuersignale zusammen mit Identifikationssignalen für Werkstoffangaben und Auftraggeber weitergeleitet werden.

11. Vorrichtung zur Ausführung des Verfahrens nach Anspruch 1, wobei die Vorrichtung eine Vermessungseinrichtung (3) mit einer Strahlungsquelle zur Abgabe gebündelter Strahlung und wenigstens zwei Strahlungsdetektoren zur Ermittlung der Oberflächenkontur eines drehbar angeordneten Dentalmodells (1, 2) mittels reflektierter Strahlung auf der Basis optischer Triangulation aufweist und die Vermessungseinrichtung (3) mit einem ersten Digital-Rechner (7) verbunden ist, dessen Ausgang an einen Steuer-Signal-Eingang einer Bearbeitungsstation (B1, B2, B3) angeschlossen ist, **dadurch gekennzeichnet, dass** zum Vergleich der Geometrie eines mittels einer Werkstückvermessungsstation (14) erfassten Werkstücks (12) als Rohling mit der Oberflächenkontur des Dentalmodells (1, 2) und zur optimalen Ausnutzung des Werkstücks ein Modellkomparator (8) einer als zweiter Digital-Rechner ausgebildeten Sammler- und Verteilerstation (20) vorgeschaltet ist, dass die Bearbeitungsstation wenigstens eine Werkzeugmaschine (29) und einen Roboter (28) aufweist, der wenigstens eine Halterung zur Aufnahme des Werkstücks (12) oder des Werkzeugs enthält, wobei die Halterung (30) um alle sechs Freiheitsgrade bewegbar ist und sechs vom zweiten Rechner ansteuerbare Antriebselemente vorgesehen sind, von denen jeweils drei Elemente Steuersignale für die 3 Freiheitsgrade der Translation und jeweils drei Elemente Steuersignale für die 3 Freiheitsgrade der Rotation empfangen.

12. Vorrichtung nach Anspruch 11, **dadurch gekennzeichnet, dass** die Halterung (30) zur Positionierung des Werkstücks (12) vorgesehen ist.

13. Vorrichtung nach Anspruch 11 oder 12, **dadurch gekennzeichnet, dass** die digital Sammler- und Verteilerstation (20) zur Verteilung von wenigstens zwei Datensätzen an wenigstens zwei Bearbeitungsstationen vorgesehen ist, wobei jeweils digitale Informationen von der Empfangs- und Sammeleinrichtung an die Bearbeitungsstation übertragen werden.

14. Vorrichtung nach Anspruch 13, **dadurch gekennzeichnet, dass** zwischen den ersten Digital-Rechner (7) und der Sammler - und Verteilerstation (20) ein digitales Übertragungssystem geschaltet ist.

## Claims

1. Method for machining workpieces (12) in dentistry by cutting and/or grinding, wherein the surface contour of a rotatable dental model (1, 2) is scanned and reflected by means of a concentrated beam of radiation, reflected radiation is detected by means of at least one radiation detector translatable parallel with the rotational axis of the model and is converted as a three-dimensional image into a system of digitally coded coordinate values (6) which are stored in at least one first digital computer (7), and the first computer (7) after having created an internal three-dimensional digital model derives from the coordinate values control signals for a machining station (B1) for machining the workpiece (12) with a tool, **characterized in that** information on the geometry of the workpiece (12) to be machined is fed to a model comparator and to a digital input-output multiplexer (20), an internal three-dimensional workpiece-image is created therefrom and is compared with an internal three-dimensional image of at least one model (1, 2), and control signals (21) are output for optimal utilization of the volume of the workpiece (12) for the shaping of at least one blank, the second computer outputting at least three control signals for every relative translational movement and at least three control signals for every relative rotational movement between tool and workpiece (12) for the production of at least one blank from the workpiece (12).

2. Method according to Claim 1, **characterized in that** the reflected radiation is detected by means of two radiation detectors translatable parallel with the rotational axis (5) of the model (1, 2).

3. Method according to Claim 1 or Claim 2, **characterized in that** following creation of at least one further digital model in the first computer, the data are transmitted to the digital input-output multiplexer (20), which distributes the data records regarding the size of the body to be produced and the material required to at least two machining stations.

4. Method according to any one of Claims 1 to 3, **characterized in that** the data are transmitted to the digital input-output multiplexer (20) by means of a bus transmission circuit or digital transmission circuit.

5. Method according to any one of Claims 1 to 4, **characterized in that** at least two internal three-dimensional models for shaping at least two blanks from a single workpiece (12) are compared with the internal three-dimensional workpiece-image.

6. Method according to any one of Claims 1 to 5, **characterized in that** the control signals are fed to a machining station serving as robot (28) for controlling the movement of at least one holder in all six degrees of freedom, with the workpiece and/or tool guided in the holder.

7. Method according to any one of Claims 1 to 6, **characterized in that** in a first step, at least the surface contour of a dental model (1, 2) or of a dental model provided with a coating is scanned by means of a laser beam and the associated surface coordinate values are stored, **in that** following application of wax to the dental model (1, 2) a wax model is formed whose surface contour is scanned in a second step by means of a laser beam, its associated surface coordinate values being stored, and **in that** in a third step, an internal three-dimensional model of the blank to be produced is created from the surface coordinate values of the dental model (1, 2) and wax model.

8. Method according to any one of Claims 1 to 6, **characterized in that** in a first step, at least the surface contour of a dental model (1, 2) or of a dental model provided with a coating is scanned by means of a laser beam and the associated surface coordinate values are stored, **in that** following application of wax to the dental model (1, 2) a wax model is formed which, in a second step, is removed from the dental model (1, 2) again, and **in that** in a third step, the surface of the wax model removed is scanned by means of a laser beam and an internal three-dimensional model of the blank to be produced is created from the surface coordinate values.

9. Method according to any one of Claims 1 to 8, **characterized in that** the surface coordinate values of the internally stored model of the blank are retransmitted by a digital transmission system as control signals for the machining of the workpiece.

10. Method according to Claim nine, **characterized in that** the control signals are retransmitted together with identification signals for material data and client.

11. Apparatus for carrying out the method according to Claim 1, wherein the apparatus has a surveying device (3) with a radiation source for emitting a concentrated beam of radiation and at least two radiation detectors for determining the surface contour of a rotatably arranged dental model (1, 2) by means of reflected radiation on the basis of optical triangulation and the surveying device (3) is connected to a first digital computer (7) whose output is connected to a control signal input of a machining station (B1, B2, B3), **characterized in that** a model comparator (8) of an input-output multiplexer (20) configured as a second digital computer is interposed to compare the geometry of a workpiece (12) acquired by means of a workpiece surveying station (14) as blank with the surface contour of the dental model (1, 2) and to optimize utilization of the workpiece, **in that** the machining station has at least one machine tool (29) and a robot (28) which comprises at least one holder for the workpiece (12) or tool, the holder (30) being movable with all six degrees of freedom and six driver elements activatable by the second computer being provided, with three of these elements receiving control signals for the three translational degrees of freedom and three receiving control signals for the three rotational degrees of freedom.

12. Apparatus according to Claim 11, **characterized in that** the holder (30) is provided for positioning the workpiece (12).

13. Apparatus according to Claim 11 or Claim 12, **characterized in that** the digital input-output multiplexer (20) is provided for distributing at least two data records to at least two machining stations, digital information being transmitted from the input-output multiplexer to each machining station.

14. Apparatus according to Claim 13, **characterized in that** a digital transmission system is connected between the first digital computer (7) and the input-output multiplexer (20).

## Revendications

1. Procédé pour usiner des pièces (12) par enlèvement de matière et/ou par meulage en technique dentaire, dans lequel le contour de surface d'un modèle dentaire rotatif (1, 2) est balayé et réfléchi à l'aide d'un rayonnement focalisé, le rayonnement réfléchi est détecté au moyen d'au moins un détecteur de rayonnement mobile parallèlement à l'axe de rotation du modèle et converti sous forme de représentation tridimensionnelle dans une trame de valeurs de coordonnées codées par voie numérique (6) qui sont mémorisées dans au moins un premier calculateur numérique (7), le premier calculateur (7) déduit à partir des valeurs de coordonnées des signaux de commande pour un poste d'usinage (B1) pour usiner la pièce (12) au moyen d'un outil, après établissement d'un modèle numérique tridimensionnel interne, **caractérisé en ce que** l'on amène des informations sur la géométrie de la pièce à usiner (12) à un comparateur de modèle et à un poste numérique de collecte et de répartition (20) réalisé sous forme de deuxième calculateur, informations à partir desquelles on établit une représentation tridimensionnelle interne de la pièce, on la compare avec une représentation tridimensionnelle interne d'au moins un modèle (1, 2) et on émet des signaux de commande (21) pour l'exploitation optimale du volume de la pièce (12) lors de la réalisation d'au moins une ébauche, le deuxième calculateur émettant au moins trois signaux de commande pour un mouvement de translation relatif et au moins trois signaux de commande pour un mouvement de rotation relatif entre l'outil et la pièce (12) pour réaliser au moins une ébauche à partir de la pièce (12).

2. Procédé selon la revendication 1, **caractérisé en ce que** l'on détecte le rayonnement réfléchi au moyen de deux détecteurs de rayonnement mobiles parallèlement à l'axe de rotation (5) du modèle (1, 2).

3. Procédé selon l'une ou l'autre des revendications 1 et 2, **caractérisé en ce qu'**après avoir établi au moins un autre modèle numérique dans le premier calculateur, on transmet les données au poste numérique de collecte et de répartition (20), qui répartit des lots de données sur au moins deux postes d'usinage à l'égard de la taille des corps à réaliser et du matériau désiré.

4. Procédé selon l'une des revendications 1 à 3, **caractérisé en ce que** l'on transmet les données poste numérique de collecte et de répartition (20) via une voie de transmission à bus ou via une voie de transmission numérique.

5. Procédé selon l'une des revendications 1 à 4, **caractérisé en ce que** l'on compare au moins deux modèles tridimensionnels internes pour former au moins deux ébauches à partir d'une seule pièce (12) avec sa représentation tridimensionnelle interne.

6. Procédé selon l'une des revendications 1 à 5, **caractérisé en ce que** l'on amène les signaux de commande à un poste d'usinage servant de robot (28) pour commander le mouvement d'au moins une monture dans tous les six degrés de liberté, la pièce et/ou l'outil étant guidé(e) dans la monture.

7. Procédé selon l'une des revendications 1 à 6, **caractérisé en ce que** dans une première étape on balaie par un rayon laser au moins le contour de surface d'un modèle dentaire (1, 2) ou d'un modèle dentaire pourvu d'un revêtement et on mémorise les valeurs de coordonnées de surface associées, **en ce qu'**après application de cire sur le modèle dentaire (1, 2) on réalise un modèle de cire dont on balaie le contour de surface par un rayon laser dans une deuxième étape en mémorisant ses valeurs de coordonnées de surface associées, et **en ce que** dans une troisième étape on établit un modèle tridimensionnel interne de l'ébauche à réaliser à partir des valeurs de coordonnées de surface du modèle dentaire (1, 2) et du modèle de cire.

8. Procédé selon l'une des revendications 1 à 6, **caractérisé en ce que** dans une première étape on balaie par un rayon laser au moins le contour de surface d'un modèle dentaire (1, 2) ou d'un modèle dentaire pourvu d'un revêtement et on mémorise les valeurs de coordonnées de surface associées, **en ce qu'**après application de cire sur le modèle dentaire (1, 2) on réalise un modèle de cire que l'on enlève de nouveau du modèle dentaire (1, 2) dans une deuxième étape, et **en ce que** dans une troisième étape on balaie par un rayon laser la surface du modèle de cire enlevé et on établit un modèle tridimensionnel interne de l'ébauche à réaliser à partir des valeurs de coordonnées de surface.

9. Procédé selon l'une des revendications 1 à 8, **caractérisé en ce que** l'on achemine les valeurs de coordonnées de surface du modèle mémorisé en interne de l'ébauche sous forme de signaux de commande au moyen d'un système de transmission numérique pour usiner la pièce.

10. Procédé selon la revendication 9, **caractérisé en ce que** l'on achemine les signaux de commande conjointement avec des signaux d'identification pour des informations sur le matériau et sur le client.

11. Appareil pour mettre en oeuvre le procédé selon la revendication 1, comprenant un dispositif de mesure (3) avec une source de rayonnement pour émettre un rayonnement focalisé et au moins deux détecteurs de rayonnement pour détecter le contour de surface d'un modèle dentaire (1, 2) agencé avec faculté de rotation au moyen d'un rayonnement réfléchi en se basant sur une triangulation optique, le dispositif de mesure (3) étant connecté à un premier calculateur numérique (7) dont la sortie est branchée à une entrée de signal de commande d'un poste d'usinage (B1, B2, B3), **caractérisé en ce que** pour comparer la géométrie d'une pièce (12) à titre d'ébauche détectée au moyen d'un poste de mesure de pièce (14) avec le contour de surface du modèle dentaire (1, 2) et pour l'exploitation optimale de la pièce, un comparateur de modèle (8) est agencé en amont d'un poste de collecte et de répartition (20) réalisé sous forme de deuxième calculateur numérique, **en ce que** le poste d'usinage comprend au moins une machine-outil (29) et un robot (28) qui comprend au moins une monture pour recevoir la pièce (12) ou l'outil, la monture (30) étant mobile dans tous les six degrés de liberté, et il est prévu six éléments d'entraînement susceptibles d'être pilotés par le deuxième calculateur, dont trois éléments respectifs reçoivent des signaux de commande pour les trois degrés de liberté en translation et trois éléments respectifs reçoivent des signaux de commande pour les trois degrés de liberté en rotation.

12. Appareil selon la revendication 11, **caractérisé en ce que** la monture (30) est prévue pour positionner la pièce (12).

13. Appareil selon l'une ou l'autre des revendications 11 et 12, **caractérisé en ce que** le poste numérique de collecte et de répartition (20) est prévu pour la répartition d'au moins deux lots de données sur au moins deux postes d'usinage, les informations numériques respectives étant transmises par le dispositif de réception et de collecte au poste d'usinage.

14. Appareil selon la revendication 13, **caractérisé en ce qu'**un système de transmission numérique est branché entre le premier calculateur numérique (7) et le poste de collecte et de répartition (20).
